Europäisches Patentamt

European Patent Office

Office européen des brevets

(11) Veröffentlichungsnummer: **0 006 619**
A2

# EUROPÄISCHE PATENTANMELDUNG

(21) Anmeldenummer: 79102153.8

(22) Anmeldetag: 28.06.79

(51) Int. Cl.3: **C 08 F 110/06,** C 08 F 2/02, C 08 F 6/28

(30) Priorität: 30.06.78 DE 2828764

(43) Veröffentlichungstag der Anmeldung: 09.01.80 Patentblatt 80/1

(84) Benannte Vertragsstaaten: **BE DE FR GB IT NL**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Fischer, Eberhard, Dr., Am Waldeck 8, D-6233 Kelkheim (Taunus) (DE)**
Erfinder: **Mayer, Gunter, Dr., Grüner Weg 17, D-6240 Königstein/Taunus (DE)**
Erfinder: **Ströer, Friedel, Robert-Schumann-Ring 75, D-6239 Kriftel (DE)**
Erfinder: **Strametz, Helmut, Dr., Unterlindau 72, D-6000 Frankfurt/Main (DE)**

(54) **Verfahren zur Reinigung von Propylen.**

(57) Ein besonders reines, für die Massepolymerisation geeignetes Propylen erhält man, wenn man die aus dem Reaktor abgezogene Polymersuspension bei tiefer Temperatur extrahiert, um das kristalline Polypropylen von löslichen Polymeren und von löslichen Katalysatorbestandteilen zu trennen, und das zu reinigende Propylen der Extraktionsflüssigkeit zugibt.

EP 0 006 619 A2

- 1 -

HOECHST AKTIENGESELLSCHAFT     HOE 78/F 136     Dr.DA/cr

Verfahren zur Reinigung    von Propylen

Propylen, welches von der Raffinerie angeliefert wird,
enthält meistens noch Spuren von Verunreinigungen, wie
beispielsweise Sauerstoff, Stickstoff, Wasserstoff, Wasser
Kohlendioxid, Kohlenmonoxid, reaktive Kohlenwasserstoffe
wie Propadien, Allen, Methylacetylen usw. und inerte Kohlenwasserstoffe wie Methan, Äthan, Propan usw.

Vor der Polymerisation des Propylens müssen alle Verunreinigungen, die mit einer der Katalysatorkomponenten reagieren
können, weitestgehend entfernt werden. Es sind dies vor
allem Sauerstoff, Wasser, Kohlenoxide und reaktive Kohlenwasserstoffe mit Doppel- und Dreifachbindungen. Üblicherweise geschieht ihre Entfernung durch Kontakt des Propylens
mit sog. Molekularsieben, aktiviertem Aluminiumoxid,
aktivem Kupfer uä. oder durch Erhöhung des Anteils an
aluminiumorganischer Verbindung im Katalysator (vgl. DE-OS
2 512 941). Indessen besitzt die Anwendung von Adorbentien den Nachteil, daß eine gesonderte Anlage aufgestellt werden muß, während die unkontrollierbare Reaktion eines Überschusses an aluminiumorganischer Verbindung mit den Verunreinigungen in der Polymerisationsmischung zu Schwankungen des Verhältnisses Übergangsmetall zu aluminiumorganischer Verbindung führt, was in der Regel den gleichmäßigen Verlauf der Polymerisation beeinträchtigt.

Ferner muß das Propylen, das während der Polymerisation im Reaktor nicht verbraucht wurde und in den Kreislauf zurückgegeben wird, von Polymeren, Katalysatoren und Desaktivatoren (Choppern) gereinigt werden. Üblicherweise geschieht diese Reinigung durch Destillation, Rektifikation oder Adsorption.

Es ist auch bekannt, das kristalline Polypropylen durch Extraktion mit einem flüssigen Kohlenwasserstoff vom löslichen ataktischen Polymeren und Katalysatorresten zu trennen (vgl. DE-OS 15 20 514, 15 95 211 und 20 19 828), es wird jedoch bei diesen bekannten Verfahren der Katalysator vor der Extraktion desaktiviert, was zusätzliche Anlagenteile (Rührkessel, Absitzbehälter etc.) notwendig macht.

Weiterhin ist ein Verfahren zur Herstellung von Propylen-Homo- oder Copolymerisaten bekannt, bei welchem die erhaltene Polymersuspension im Gegenstrom mit flüssigen Monomeren extrahiert wird (vgl. DE-OS 25 01 614), indessen ist dieser Druckschrift nicht zu entnehmen, wie das Monomere gereinigt wird.

Es wurde nun gefunden, daß man die vorgenannten Nachteile vermeiden kann, wenn man bei der Polymerisation in flüssigem Propylen, bei welcher das kristalline Polypropylen durch Extraktion von löslichen Polymeren und von löslichen Katalysatorbestandteilen abgetrennt wird, die aus dem Reaktor abgezogene Suspension bei tiefer Temperatur extrahiert und das zu reinigende Propylen der Extraktionsflüssigkeit zugibt.

Gegenstand der Erfindung ist somit das in den Ansprüchen genannte Verfahren.

Der Vorteil des erfindungsgemäßen Verfahrens besteht darin, daß keine gesonderte Anlage zur Reinigung des Propylens errichtet werden muß und daß die eigentliche Polymerisation nicht beeinflußt wird. Dies ist vor allem bei Verwendung hochaktiver Katalysatoren von Vorteil, weil in diesen Fällen die pro Volumeneinheit verwendete Menge an Schwermetall-Komponente besonders niedrig und die Störanfälligkeit besonders groß ist. Außerdem wird ein ungewöhnlich hoher Reinheitsgrad des Propylens erreicht, wodurch die Ausbeute an Polymer, bezogen auf die im Polymerisationsreaktor eingesetzte Menge an Schwermetallverbindung, erhöht wird. Weiterhin wird eine Einsparung an aluminiumorganischer Verbindung erreicht. Das erfindungsgemäße Verfahren findet in erster Linie Anwendung auf Propylen, welches bei der Polymerisation im flüssigen Monomeren als Dispergiermittel eingesetzt wird. Das Verfahren ist aber ebenso anwendbar bei Propylen, welches in der Gasphase polymerisiert wird, wobei anschließend das Polymerpulver mit flüssigem Propylen zur Entfernung löslicher Katalysatorbestandteile extrahiert wird.

Die aus dem Polymerisationsreaktor abgezogene Polymersuspension, welche isotaktisches Polypropylen, suspendiert im überschüssigen flüssigen Propylen, Katalysatorreste, sowie gelöstes amorphes Polypropylen und niedermolekulares isotaktisches Polypropylen enthält, wird durch geeignete Maßnahmen so weit abgekühlt, daß keine nennenswerte Polymerisation mehr stattfindet und im oberen Teil einer Gegenstrom-Extraktionskolonne eingesetzt. Im allgemeinen liegt diese Temperatur im Bereich von 270 bis 310, vorzugsweise 280 bis 300 K. Der Feststoffgehalt dieser Suspension liegt im Bereich von 0,1 bis 0,5 kg Polypropylen pro Liter Propylen, vorzugsweise 0,2 bis 0,4 kg PP/l Propylen. Wegen

0006619

des Dichteunterschiedes zwischen dem Monomeren und dem Polymeren wandert das Letztere schneller zum Boden der Kolonne. Diesem abwärts gerichteten Feststoffstrom strömt gereinigtes, flüssiges Propylen mit einem mehr oder weniger großen Anteil an zu reinigendem Propylen in einer solchen Menge entgegen, daß sich ein Verhältnis von 2 bis 8 l, vorzugsweise 3 bis 8 l Waschpropylen pro kg Polypropylen einstellt. Der Anteil des zu reinigenden Propylens an der Gesamtmenge des Waschpropylens entspricht jeweils der Summe von gebildetem isotaktischen und ataktischen Polypropylen sowie der Propylenverluste durch Abgas. Aufgrund der Verdrängungswirkung, die mit Hilfe mechanischer Einbauten gesteigert werden kann, läßt sich am Boden der Kolonne ein überwiegend nur noch feste Katalysatorbestandteile enthaltendes kristallines Polypropylen austragen. Die mit allen löslichen Bestandteilen der eingespeisten Polypropylensuspension beladene Extraktionsflüssigkeit wird am Kopf der Kolonne abgezogen, nachdem die in dem zu reinigenden Propylen enthaltenen Verunreinigungen mit den in der Polymersuspension vorhandenen aluminiumorganischen Verbindungen und Übergangsmetallverbindungen reagieren konnten, wobei die reaktiven Verunreinigungen gebunden und dadurch in schwerer flüchtige Verbindungen überführt werden. Die Waschflüssigkeit wird einer einfachen Trennvorrichtung zugeführt, in welcher das Propylen von allen schwerer flüchtigen Produkten befreit wird.

Die Verweilzeit der Polymerteilchen in der Extraktionskolonne beträgt ca. 10 bis 60 min , vorzugsweise 20 bis 30 min. Die Temperatur der Waschflüssigkeit liegt im Bereich von 280 bis 312 K, vorzugsweise 283 bis 303 K, der Druck in der Kolonne beträgt 7 bis 16 bar, vorzugsweise 8 bis 13 bar.

Nach der Befreiung von schwerer flüchtigen Produkten wird das Propylen, gegebenenfalls nach Durchgang durch einen Verdichter kondensiert und gelangt in einen Lagerbehälter. Aus diesem wird fortlaufend ein Teil entnommen und dem Polymerisationsreaktor zugeführt. Gegebenenfalls wird ein weiterer Teil als Waschflüssigkeit für die vom Reaktor kommende Polymersuspension verwendet, wobei diesem Anteil vor Eintritt in die Extraktionskolonne soviel frisches Propylen zugeführt wird, wie der Menge entspricht, die im Reaktor in Propylenpolymere umgewandelt wird. Somit besteht ein Propylenkreislauf, aus dem einerseits laufend der Polymerisationsreaktor gespeist wird, und der andererseits dauernd eine Ergänzung durch frisches Propylen erhält.

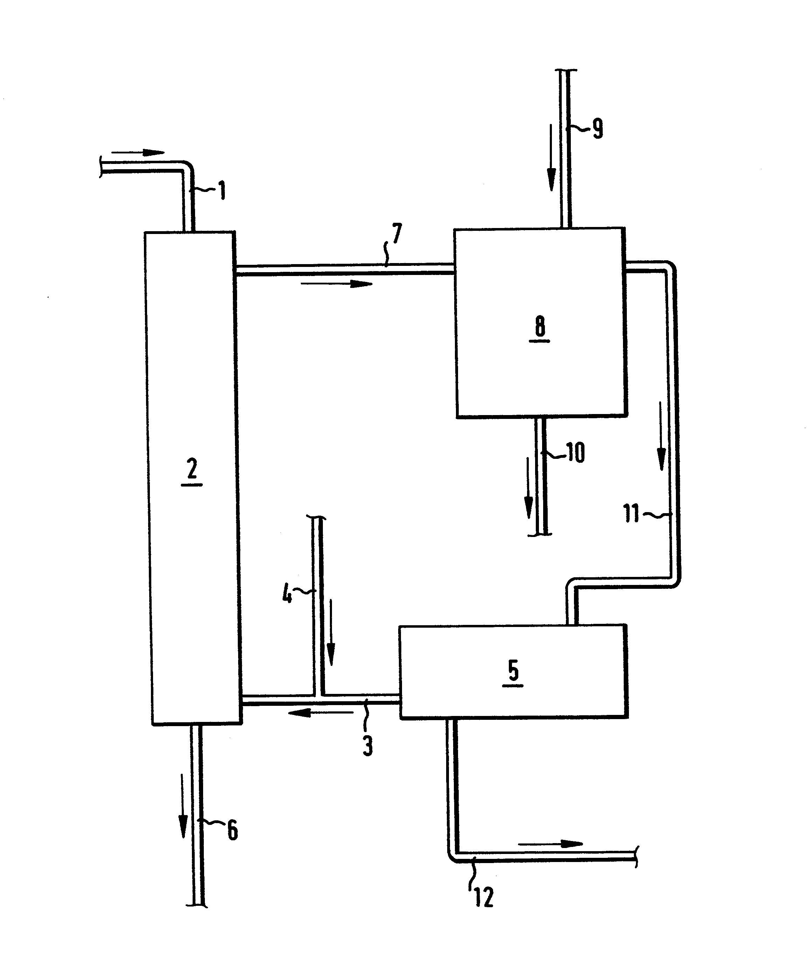

In der Figur wird das erfindungsgemäße Verfahren weiter erläutert.

Durch die Leitung 1 gelangt die vom Polymerisationsreaktor kommende Polymersuspension in die Gegenstrom-Extraktionskolonne 2, wo die festen Teilchen nach unten sinken. Vor der eigentlichen Extraktion wird die Suspension durch geeignete Maßnahmen so weit abgekühlt, daß keine nennenswerte Polymerisation mehr stattfindet. Das kann geschehen beispielsweise durch einen Wärmeaustauscher. Es ist aber auch möglich, eine Entspannungsverdampfung durchzuführen, indem man die Suspension in die Extraktionskolonne hinein entspannt. Danach hat die Suspension eine Temperatur von 270 bis 310, vorzugsweise 280 bis 300 K, d.h. -3 bis + 37, vorzugsweise 7 bis 27°C. Dadurch wird die Polymerisation weitgehend gestoppt, ohne daß Desaktivatoren zugesetzt werden. Durch die Leitung 3, welche aus der Leitung 4 soviel frisches Propylen erhält, wie im Reaktor in Propylenpolymere umgewandelt wird, wird aus dem Lagerbehälter 5 laufend Propylen in die Kolonne 2 gepumpt, strömt den festen Polymerteilchen entgegen und befreit sie weitgehend von löslichen Produkten. Die gereinigten festen Polymerteilchen sammeln sich am Boden der Kolonne 2 und werden durch die Leitung 6 abgezogen. Die mit den löslichen Produkten beladene Waschflüssigkeit verläßt die Extraktionskolonne durch die Leitung 7 und gelangt in eine Trennvorrichtung 8. Hier wird das Propylen von allen gelösten Bestandteilen befreit. Dies geschieht vorzugsweise durch Destillation und Kondensation in einer mehrstufigen Anlage. Durch die Leitung 9 werden die Produkte abgeführt, die leichter sieden als Propylen, z.B. Stickstoff, Wasserstoff, Methan, usw., während durch die Leitung 10 die schwererflüchtigen Produkte, z.B. ataktisches Polypropylen, niedermolekulares isotaktisches Polypropylen, nicht umgesetzte aluminiumorganische Verbindungen usw., abgezogen werden. Das reine Propylen fließt durch die Leitung 11 in den Lagerbehälter 5. Ein Teil dieses Propylens wird laufend über die Leitung 12 entnommen und dem Polymerisationsreaktor zugeführt.

## Beispiel 1

Die in diesem Beispiel verwendete Polypropylensuspension kann auf die nachstehend beschriebene Weise hergestellt werden, wobei die Verwendung andersartig hergestellter Katalysatorkomponenten durchaus möglich ist.

In einem 10 l-Rührgefäß werden unter Ausschluß von Luft und Feuchtigkeit 1090 ml einer hydrierten, sauerstofffreien Benzinfraktion (Kp 140 bis 165°C) und 550 ml Titantetrachlorid (5 Mol) vorgelegt und bei 0°C innerhalb von 8 Stunden unter Rühren (250 U/Min.) und Stickstoffüberlagerung eine Lösung von 1111,2 g Aluminiumäthylsesquichlorid (enthält 4,5 Mol Aluminiumdiäthylmonochlorid) in 334 g der Benzinfraktion zugetropft. Es scheidet sich ein rotbrauner feiner Niederschlag aus. Dann wird 2 Stunden bei 0°C und anschließend 12 Stunden bei Raumtemperatur gerührt.

Darauf wird die Suspension 4 Stunden auf 90°C erhitzt und danach weitere 6 Stunden auf 110°C. Der ausgeschiedene Niederschlag wird nach dem Absitzen von der überstehenden Mutterlauge durch Dekantieren getrennt und fünfmal mit je 2000 ml der Benzinfraktion gewaschen. Das gewaschene feste Reaktionsprodukt wird wieder in der Benzinfraktion suspendiert und die Suspension auf eine Konzentration von 2 Mol $TiCl_3$/Liter eingestellt. Die Bestimmung des Gehaltes der Suspension an dreiwertigem Titan erfolgt durch Titration mit einer Ce(IV)-Lösung.

Die Suspension wird jetzt unter Rühren auf 80°C erhitzt, worauf man innerhalb von 30 Minuten 0,95 Mol Di-n-Butyläther pro Mol $TiCl_3$ zutropft. Anschließend wird die Suspension eine Stunde bei 80°C gehalten. Bei der Zugabe des Äthers färbt sich die Mutterlauge olivgrün. Danach wird das feste $TiCl_3$-haltige Reaktionsprodukt fünfmal mit je 500 ml der Benzinfraktion pro Mol $TiCl_3$ gewaschen.

Das gewaschene feste Reaktionsprodukt wird wieder in der Benzinfraktion suspendiert und die Suspension in einem größeren Rührbehälter auf eine Konzentration von 0,01 Mol $TiCl_3$/Liter verdünnt. Daraufhin gibt man 0,02 Mol Aluminium-diäthylmonochlorid sowie 0,005 Mol Cycloheptatrien-(1,3,5) pro Liter Kontaktsuspension zu und rührt eine Stunde bei Raumtemperatur.

In einen Rohrreaktor von 360 l Inhalt werden aus dem Lagerbehälter 5 durch die Rohrleitung 12 stündlich 60 kg Propylen eingepumpt, weiterhin 0,2 Mol/h Aluminium-diäthylmonochlorid, 4 Liter der zuvor hergestellten, vorstehend beschriebenen Mischung der Katalysatorkomponenten, entsprechend 0,04 Mol $TiCl_3$, 0,08 Mol Aluminium-diäthylmonochlorid und 0,02 Mol Cycloheptatrien-(1,3,5), sowie 30 Nl Wasserstoff.

Nach einer Verweilzeit von 3,5 Stunden bei 60°C und einem Reaktordruck von 30 bar werden 24 kg/h Polypropylenpulver zusammen mit 36 kg/h Propylen Mutterlauge aus dem Reaktor abgezogen, d.h. eine Polypropylensuspension, die in 1 l Propylen suspendiert bzw. gelöst enthält

0,29 kg isotaktisches Polypropylen
0,007 kg ataktisches Polypropylen
0,48 mMol Ti
3,41 mMol Aluminiumalkylverbindungen

Die Suspension wird zur Entspannung auf 12 bar (entsprechend 300 K) und Phasentrennung durch Sedimentation durch die Leitung 1 in die Gegenstrom-Extraktionskolonne 2 eingeführt und dort mit dem durch die Leitungen 3 und 4 einströmenden flüssigen Propylen in Kontakt gebracht. Das Mengenverhältnis beträgt 2,5 l Waschpropylen auf 1 kg isotaktisches Polypropylen (ca. 0,6 l auf 1 l Suspension). Die durch die Leitungen 3 und 4 zufließenden Propylenmengen stehen im Verhältnis 1 (3) zu 4 (4). Der durch Leitung 6 abfließende Polypropylenschlamm enthält noch 0,48 mMol/l an Aluminiumalkylverbindungen. Das daraus abgetrennte und getrocknete Polypropylen-Pulver hat über einen langen Zeitraum einen konstanten MFI (230/5) von 5,4 ± 0,5 g/10 min.

Vergleichsbeispiel

Das Beispiel 1 wird wiederholt, jedoch wird das zum Ersatz des polymerisierten Propylens und des durch das Abgas verlorengegangenen Propylens notwendige Frischpropylen nicht dem Waschturm zugeführt, sondern direkt in den Reaktor eingespeist (21 kg/h). Man erhält nur 20,5 kg Polypropylen/h mit einem MFI (230/5) von 6,3 ± 1,1 g/10 min. Der Gehalt der Polypropylensuspension an ataktischem Polypropylen beträgt 0,011 kg/l Propylen.

Beispiel 2

Gemäß Beispiel 1, jedoch unter Zusatz von insgesamt 0,32 Mol/h an Aluminiumdiäthylmonochlorid wird eine Polypropylen-suspension hergestellt, welche in 1 l Propylen suspendiert bzw. gelöst enthält

> 0,34 kg isotaktisches Polypropylen
> 0,008 kg ataktisches Polypropylen
> 0,5 mMol Ti
> 4,0 mMol Aluminiumalkylverbindungen.

108 l/h dieser Suspension wird durch die Leitung mit einem Druck von 10 bar und einer Temperatur von 282 K in die Gegenstrom-Extraktionskolonne 2 eingeführt und dort mit durch die Leitungen 3 und 4 einströmendem flüssigen Propylen in Kontakt gebracht. Das Mengenverhältnis beträgt 6 l

Wasch-Propylen auf 1 kg isotaktisches Polypropylen (= 1,4 1 auf 1 1 Suspension). Die durch die Leitungen 3 und 4 zufließenden Propylenmengen stehen im Verhältnis 2 (3) zu 1 (4). Der durch die Leitung 6 abfließende Polypropylenschlamm enthält 0,53 mMol/1 Aluminiumalkylverbindungen. Das nach Passieren der Trennvorrichtung 8 in den Lager-tank 5 fließende Propylen enthält

| | |
|---|---|
| Acetylen | < 1 ppm |
| Propadien | 8 ppm |
| Methylacetylen | 3 ppm |
| Sauerstoff | 3 ppm |
| Kohlenmonoxid | < 1 ppm |
| Kohlendioxid | < 1 ppm |
| Wasser | < 3 ppm |

Das durch die Leitung 4 in die Anlage eingeschleuste Propylen enthält hingegen

| | |
|---|---|
| Acetylen | 5 ppm |
| Propadien | 20 ppm |
| Methylacetylen | 10 ppm |
| Sauerstoff | 10 ppm |
| Kohlenmonoxid | 8 ppm |
| Kohlendioxid | 10 ppm |
| Wasser | 25 ppm. |

Beispiel 3

114 1/h einer Polypropylensuspension, welche in 1 1 Propylen suspendiert bzw. gelöst enthält

| | |
|---|---|
| 0,23 kg | isotaktisches Polypropylen |
| 0,004 kg | ataktisches Polypropylen |
| 0,35 mMol | Ti |
| 3,28 mMol | Aluminiumalkylverbindungen |

0006619

werden wie in Beispiel 1 extrahiert, wobei das Mengenverhältnis Waschpropylen zu isotaktischem Polypropylen 4 l /
1 kg PP beträgt. Die durch die Leitungen 3 und 4 zufließenden Propylenmengen stehen im Verhältnis 1 (3) zu 1 (4). Der
durch die Leitung 6 abfließende Polypropylenschlamm enthält
0,41 mMol/l Aluminiumalkylverbindungen. Das aus der
Trennvorrichtung 8 in den Vorratsbehälter fließende Propylen
enthält die Verunreinigungen in der gleichen geringen Menge
wie gemäß Beispiel 2.

## PATENTANSPRUCH

Verfahren zur Reinigung von Propylen für ein Massepolymerisationsverfahren, bei welchem das erhaltene kristalline Polypropylen durch Extraktion der vom Polymerisationsreaktor kommenden Polymersuspension mit einem flüssigen Kohlenwasserstoff von löslichen Polymeren und von löslichen Katalysatorbestandteilen abgetrennt wird, dadurch gekennzeichnet, daß die Polymersuspension vor der Extraktion so weit abgekühlt wird, daß keine nennenswerte Polymerisation mehr stattfindet, und daß die Extraktion ohne Zusatz von Desaktivatoren durchgeführt und das zu reinigende Propylen der Extraktionsflüssigkeit zugegeben wird.

0006619